# EUROPÄISCHE PATENTSCHRIFT

(11) **EP 3 103 683 B1**
(45) Veröffentlichungstag und Bekanntmachung des Hinweises auf die Patenterteilung: **15.08.2018**
(21) Anmeldenummer: 16001285.2
(22) Anmeldetag: 08.06.2016
(51) Int. Cl.: B60R 1/00, G06K 19/06, G06K 9/78, G06K 9/80, G06T 7/00

(54) **VERFAHREN ZUM BETRIEB EINES KAMERABASIERTEN FAHRZEUGSYSTEMS**
METHOD FOR OPERATING A CAMERA-BASED VEHICLE SYSTEM
PROCEDE DE FONCTIONNEMENT D'UN SYSTEME DE VEHICULE BASE SUR UNE CAMERA

(30) Priorität: 10.06.2015 DE 102015007391
(43) Veröffentlichungstag der Anmeldung: 14.12.2016
(73) Patentinhaber: AUDI AG, 85045 Ingolstadt (DE)
(72) Erfinder: Pollmer, Jens, DE - 85375 Neufahrn b. Freising (DE)
(74) Vertreter: Thielmann, Frank

(56) Entgegenhaltungen:
- EP-A2- 0 691 599
- WO-A1-2015/041005
- DE-A1-102005 003 254
- DE-A1-102008 028 303
- DE-A1-102009 059 797
- DE-A1-102012 103 495
- DE-A1-102012 214 283

## Beschreibung

Die Erfindung betrifft ein Verfahren zum Betrieb eines kamerabasierten Fahrzeugsystems, umfassend eine Kamera, die im Fahrzeuginneren zur Aufnahme des Fahrzeugvorfelds oder des Fahrzeugrückfelds angeordnet ist, sowie eine die Kamerabilder verarbeitende Steuerungseinrichtung.

Moderne Kraftfahrzeuge verfügen über eine Reihe von Fahrzeugsystemen, die dem Fahrer assistieren sollen oder die für den Betrieb des Kraftfahrzeugs relevant sind. Manche dieser Fahrzeugsysteme sind kamerabasiert, das heißt, dass ihre Funktion darauf beruht, dass über eine Kamera Bilder der Fahrzeugumgebung aufgenommen werden, die seitens einer Steuerungseinrichtung analysiert werden, um gestützt auf die analysierten Informationen entsprechende Informationen oder Mitteilungen an den Fahrer auszugeben, Eingriffe in die Fahrzeuglängs- oder Querführung vorzunehmen etc.

Häufig wird eine solche Kamera z. B. im Bereich des Innenspiegels an der Frontscheibe verbaut, wobei die Kamera nach vorne gerichtet ist, um das Fahrzeugvorfeld aufzunehmen. Mitunter sind aber auch Fahrzeuge im Bereich der Fahrzeugrückseite verbaut, beispielsweise bei SUVs oder Transportern, um das das Fahrzeugrückfeld aufzunehmen. Mitunter sind auch seitlich angeordnete Kameras vorgesehen, die das seitliche Umfeld aufnehmen. Die Kameras können sowohl im Inneren des Fahrzeugs als auch außen angebracht sein. Häufig befindet sich dabei im Sichtbereich der Kamera ein Teil des Kraftfahrzeugs, beispielsweise bei einer Frontkamera zumeist die Motorhaube des Fahrzeugs, bei einer Heckkamera beispielsweise die untere Stoßstange oder dergleichen. Um Wechselwirkungen und Einflüsse eines im Kamerabild sichtbaren Fahrzeugteils, also beispielsweise der Motorhaube, auf die Bildauswertung und damit die Informationsgewinnung zu vermeiden, wird in heutigen Fahrzeugsystemen die Lage der Motorhaube vorab definiert.

Sie wird aus Konstruktionsdaten des Kraftfahrzeugs und dem bekannten Positionsort der Kamera bestimmt und einmalig definiert. Diese Maße sind jedoch toleranzbehaftet, so dass ein Sicherheitspuffer im System vorgehalten werden muss, um sicherzugehen, dass diese Toleranzen nicht dazu führen, dass ein kleiner Teil der Motorhaube doch wieder im verarbeiteten Bildbereich erscheint. Es wird also quasi mehr aus dem aufgenommenen Kamerabild "ausgeschnitten", um die Motorhaube oder ein anderes Fahrzeugteil aus der Bildverarbeitung auszunehmen, als nötig, was die Systemperformance einschränkt.

DE 10 2008 028303 A1 offenbart ein Verfahren mit den Merkmale des Oberbegriffs des Anspruchs 1.

Der Erfindung liegt das Problem zugrunde, ein Verfahren anzugeben, das demgegenüber verbessert ist und das es ermöglicht, die Systemperformance zu verbessern.
Zur Lösung dieses Problems ist bei einem Verfahren der eingangs genannten Art erfindungsgemäß vorgesehen, dass zur Bestimmung eines in wenigstens einem Kamerabild gegebenen informationsrelevanten Bildbereichs seitens der Steuerungseinrichtung ein in dem Kamerabild gezeigter, einen Teil des Fahrzeugs zeigender Bildbereich im Kamerabild selbst ermittelt wird, welcher Bildbereich im Rahmen der Verarbeitung nachfolgend aufgenommener Kamerabilder außer Betracht bleibt.
Die Erfindung sieht vor, den aus dem Gesamtbild "auszuschneidenden" Bildbereich, in dem der Fahrzeugteil gezeigt ist, in einem oder mehreren aktuell aufgenommenen Kamerabild selbst zu ermitteln. Dies ermöglich es, den nicht zu berücksichtigenden Bildbereich exakt so zu bemessen, wie er sich tatsächlich im jeweiligen Kamerabild darstellt. Denn die Ist-Darstellung zeigt die reale konstruktive Situation, so dass exakt der Bildbereich unterdrückt werden kann, in dem das Fahrzeugteil gezeigt ist, nicht aber ein zusätzlicher, aus Toleranzgründen berücksichtigter Bildbereich.
Hieraus resultiert, dass der informationsrelevante Bildbereich genau dem Bildbereich entspricht, der tatsächlich Informationen enthält, die seitens der Steuerungseinrichtung erfasst respektive ausgewertet werden können. Da dieser informationsrelevante Bildbereich nicht aus Sicherheitsgründen respektive Toleranzgründen prophylaktisch beschnitten ist, steht folglich ein größerer Bildbereich zur Auswertung zur Verfügung, so dass die Systemperformance verbessert werden kann.

In Weiterbildung der Erfindung kann vorgesehen sein, dass die Ermittlung des einen Teil des Fahrzeugs zeigenden Bildbereichs anhand eines in dem oder den hierzu verarbeitenden Kamerabildern gezeigten Musters oder Objekt, das im informationsrelevanten Bildbereich sichtbar und in dem einen Teil des Fahrzeugs zeigenden Bildbereich verdeckt ist, erfolgt, welches Muster oder Objekt seitens der Steuerungseinrichtung ermittelt wird. Die Steuerungseinrichtung verarbeitet das oder die Kamerabilder unter Verwendung eines entsprechenden Algorithmus, der ein Muster oder ein Objekt erfasst, das im informationsrelevanten Bereich sichtbar ist. Dieses Objekt verläuft bis zur Trennlinie respektive Kante, in der der informationsrelevante Bildbereich in den anderen, das Fahrzeugteil zeigenden Bildbereich übergeht, das heißt, dass das Muster oder das Objekt dann nach dem Übergang von dem Fahrzeugteil verdeckt ist. Die Steuerungseinrichtung ist nun in der Lage, ein solches Muster oder ein solches Objekt zu erfassen und so einen Punkt oder Bereich zu detektieren, an dem der eine Bildbereich in den anderen übergeht. Anhand der Geometrie des Fahrzeugteils, also beispielsweise der Motorhaube, die in ihren Konstruktionsdaten steuerungseinrichtungsseitig bekannt ist, kann nun der genaue Verlauf der Kante erfasst werden, so dass der Übergangsbereich exakt definiert werden kann. Alternativ zur Ermittlung auf Basis der Geometriedaten des Fahrzeugteils ist es auch denkbar, dass die Steuerungseinrichtung über einen geeigneten Kantendetektionsalgorithmus oder dergleichen den Verlauf der Kante respektive des Bildbereichsübergangs ermitteln kann.

Das Muster oder das Objekt kann entweder am Fahrzeug selbst angeordnet sein, beispielsweise in dem es auf die Motorhaube aufgebracht oder gelegt wird respektive im Kantenbereich angebracht wird. Die Steuerungseinrichtung ermittelt nun mit dem geeigneten Analysealgorithmus dieses Muster oder Objekt und kann aus den gewonnenen Informationen die Trennlinie der Bildbereiche respektive den Verlauf der Fahrzeugteilkante bestimmen.

Alternativ zur Anordnung des Musters oder des Objekts am Fahrzeug selbst ist es auch denkbar, dass sich das Muster oder Objekt vor dem Fahrzeug befindet. Das Fahrzeug wird in eine entsprechend zu definierende Position vor diesem Muster oder Objekt gebracht, wonach die Steuerungseinrichtung das oder die Kamerabilder wiederum analysiert und zunächst das Muster oder Objekt im Bild ermittelt, und anschließend den Punkt oder Bereich, in dem das Muster oder Objekt beim Bildbereichsübergang "verschwindet". Das heißt, dass das Fahrzeugteil im Bild dort beginnt, wo es nicht mehr gelingt, das Muster oder Objekt zu erkennen.

Während der Aufnahme des oder der Kamerabilder kann das Muster oder Objekt und das Fahrzeug positionsfest sein, das heißt, dass beide statisch sind. Sie bewegen sich also nicht relativ zueinander. Alternativ ist es denkbar, dass sich das Muster oder Objekt relativ zum Fahrzeug oder das Fahrzeug relativ zum Muster oder Objekt bewegt. Ein Element bewegt sich also, während das andere Element positionsfest ist. Hier werden folglich eine Reihe von Kamerabildern aufgenommen, die das sich - unabhängig davon, welches Element sich bewegt - relativ zum Fahrzeug bewegende Muster oder Objekt zeigen. Es handelt sich in diesem Fall also um ein dynamisches Verfahren.

Bei einem sich relativ zum Fahrzeug bewegenden Muster oder Objekt kann das Muster oder Objekt im Wesentlichen horizontal bewegt werden. Das heißt, dass es, beispielsweise über eine Linearführung auf dem Boden geführt, relativ zum Fahrzeug, bevorzugt natürlich in der Fahrzeuglängsachse, bewegt wird. Es kann hierbei sogar unter das Fahrzeug geführt werden. Alternativ zu einer quasi horizontalen Bewegung kann das Muster oder Objekt auch auf- und/oder abbewegt, oder horizontal quer entlang des Fahrzeugs bewegt werden. Hierbei wird das Muster oder Objekt beispielsweise vertikal oder seitlich an einer Führung entlang bewegt, so dass es zwangsläufig im Laufe der Bewegung, beispielsweise von oben kommend, vom Fahrzeugteil verdeckt wird. Die jeweilige Bewegung ist in den Kamerabildern gezeigt, so dass der Ort, wo das Muster oder Objekt quasi hinter dem Fahrzeugteil "verschwindet", exakt erfasst werden kann. Auch eine horizontale, quer entlang der Fahrerseite erfolgende Bewegung ist denkbar, auch dabei ändert sich der in den nacheinander aufgenommen Bildern sichtbare Teil des Musters oder Objekts.

Bewegt sich das Fahrzeug relativ zum Muster oder Objekt, so kann das Muster oder Objekt wiederum am Boden liegend positioniert sein, während das Fahrzeug das Muster oder Objekt überfährt, so dass sichergestellt ist, das es zwingend verschwindet.

Das Muster oder Objekt kann beispielsweise ein Referenzmuster sein, beispielsweise in Form eines Schachbrettmusters, das auf eine Fläche gedruckt ist, oder eine einfache schwarz/weiß-Fläche mit einer definierten Kante. Alternativ kann das Referenzmuster auch als Lichtsäule ausgeführt sein oder ähnliches. In jedem Fall handelt es sich um ein extra für diesen Zweck vorgesehenes und entsprechend positioniertes Muster oder Objekt.

Alternativ dazu kann es sich bei dem Muster oder Objekt auch um ein natürliches, im Fahrzeugvorfeld oder Fahrzeugrückfeld befindliches Muster oder Objekt handeln, das seitens der Steuerungseinrichtung bestimmt wird. Als ein solches Muster wird bevorzugt ein solches bestimmt, dass eine im Bild sichtbare Kantenstruktur aufweist. Denkbar ist beispielsweise eine vertikale Säule, ein Balken, ein Möbel oder dergleichen, wie sie beispielsweise in einer Werkstatt oder ähnlichem, wo zu Einrichtungszwecken die Bildbereichsermittlung respektive Kalibrierung vorgenommen wird. Diese Alternative ist von Vorteil, als keine speziellen Muster oder Objekte vorgehalten werden müssen.

Die Erkennung der Haube oder einer anderen Sicht verdeckenden Einheit kann auch über eine zeitliche Betrachtung der Bilder erfolgen, also einem Vergleich mehrerer zeitlich nacheinander bzw. zu verschiedenen Zeitpunkten aufgenommener Bilder der selben verbauten Kamera gegeneinander - der Bereich mit z. B. der Motorhaube unterscheidet sich weniger als andere Bereiche.

Neben dem Verfahren selbst betrifft die Erfindung ferner ein Kraftfahrzeug, umfassend eine Kamera mit zugeordneter Steuerungseinrichtung, welches Kraftfahrzeug zur Durchführung des erfindungsgemäßen Verfahrens ausgebildet ist.

Weitere Vorteile und Einzelheiten der Erfindung ergeben sich aus den im Folgenden beschriebenen Ausführungsbeispielen sowie anhand der Zeichnungen:
- Fig. 1: eine Prinzipdarstellung eines erfindungsgemäßen Kraftfahrzeugs,
- Fig. 2: eine Prinzipdarstellung eines Kamerabilds mit darin gezeigtem Referenzmuster,
- Fig. 3: eine Prinzipdarstellung eines Verfahrensausführung mit vertikal beweglichem Referenzmuster,
- Fig. 4: eine Prinzipdarstellung einer Verfahrensausführung mit horizontal beweglichem Referenzmuster und
- Fig. 5: eine Prinzipdarstellung einer Verfahrensausführung mit statischem Referenzmuster.

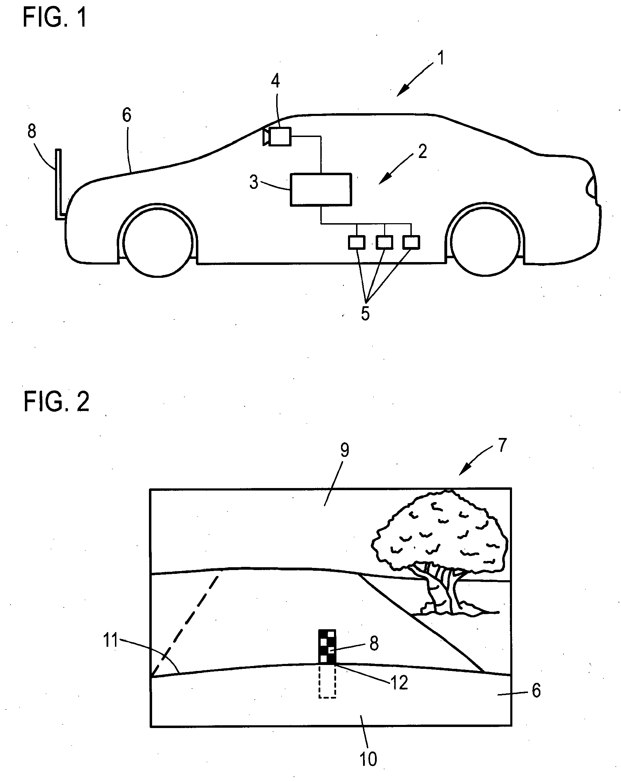

Fig. 1 zeigt ein erfindungsgemäßes Kraftfahrzeug 1, umfassend ein Fahrzeugsystem 2, beispielsweise in Form eines Fahrerassistenzsystems oder ähnlichem, mit einer Steuerungseinrichtung 3, einer das Fahrzeugvorfeld aufnehmenden Kamera 4 sowie exemplarisch mehreren über die Steuerungseinrichtung 3 bedienten Gerätschaften 5, bei denen es sich um ein Anzeigeelement, ein Stellelement oder sonstige Bauteile oder Baugruppen im Fahrzeug handeln kann, die über das Fahrzeugsystem angesteuert respektive betrieben werden.

Die Kamera 4 nimmt wie beschrieben das Fahrzeugvorfeld auf. Im Erfassungsbereich der Kamera befindet sich auch ein Teil der Motorhaube 6. Der Bildbereich, der die Motorhaube 6 zeigt, kann zwangsläufig keine informationsrelevanten Inhalte aufweisen. Es ist daher zu ermitteln, wo genau die Grenze zwischen dem Bildbereich, der informationsrelevante Informationen beinhaltet, und dem Bildbereich, der das Fahrzeugteil, hier die Motorhaube 6 zeigt, verläuft.

Fig. 2 zeigt exemplarisch ein Kamerabild 7, das über die Kamera 4 aufgenommen wird. Wie Fig. 1 zeigt, ist am Fahrzeug 1 ein Referenzmuster 8 im Bereich der Fahrzeugfront angeordnet, das sich bis unter die Motorhaube 6 erstreckt. In Fig. 2 ist das Referenzmuster 8 daher teilweise gezeigt, der gestrichelte Bereich des Referenzmusters 8 ist über die Motorhaube 6 verdeckt. Es sind folglich zwei Bildbereiche gegeben, nämlich der obere Bildbereich 9 enthaltend analyserelevante Information sowie der untere Bildbereich 10, der letztlich die Motorhaube 6 zeigt.

Die Steuerungseinrichtung 3 ist nun in der Lage, die Grenzlinie 11, wo der eine Bildbereich 9 in den anderen Bildbereich 10 übergeht, zu ermitteln. Dies geschieht durch Analyse des Kamerabildes 7 zur Erfassung des Referenzmusters 8, das hier schachbrettartig in Schwarz-Weiß-Felder unterteilt ist. Die Steuerungseinrichtung 3 ermittelt nun genau den Bereich 12, in dem die regelmäßige Struktur, nämlich das Referenzmuster 8, vom oberen Bildbereich 9 kommend quasi verschwindet. An bzw. ab genau an diesem Bildbereich 12 wird das Referenzmuster 8 folglich durch die Motorhaube 6 verdeckt.

Ist die Bildzeile oder der Bildpunkt bekannt, wo genau dieser Übergangsbereich 12 ist, kann die Steuerungseinrichtung nun den restlichen Verlauf der Motorhaubenkante, also der Linie 11 ermitteln. Dies kann entweder dadurch geschehen, dass auch bekannte Geometriedaten der Motorhaube zurückgegriffen wird, die seitens der Steuerungseinrichtung 3 vorliegen: Denn die Motorhaube 6 hat einen definierten, charakteristischen Verlauf. Aus diesem definierten Verlauf kann nun der gesamte Verlauf der Linie 11, beginnend ab dem Bereich 12, ermittelt werden. Alternativ ist es denkbar, den Verlauf der Linie 11, die ja eine scharfe, optische Trennung der Bildbereiche 9 und 10 definiert, über einen entsprechenden Kantendetektionsalgorithmus wiederum durch Bildanalyse zu ermitteln. Schließlich könnte, wenn die Grenzlinie aufgrund der Geometrie der Motorhaube 6 quasi geradlinig ist, einfach die ermittelte Bildzeile des Bereichs 12 als Trennungslinie der Bildbereiche 9 und 10 verwendet werden

Unabhängig davon kann die Steuerungseinrichtung 3 nun den informationsrelevanten Bildbereich 9 definieren, so dass im Rahmen einer nachfolgenden Verarbeitung des Bildinhalts des Bildbereichs 9 nur aus diesem die Informationen gewonnen werden können, die nachfolgend zur Ansteuerung der Gerätschaften 5 verwendet werden. Eine Beeinflussung der Bildanalyse durch den Bildbereich 10 ist ausgeschlossen, da dieser Bildbereich im Rahmen der Verarbeitung berücksichtigt bleibt. Es wird folglich nahezu der maximale relevante Bildbereich 9 der Analyse zugrunde gelegt, so dass größt mögliche Informationstiefe erfasst werden kann. Gleichzeitig wird die Analyse des Bildbereichs 6 vermieden, was zeitaufwendig und unnötig ist, da darin keine relevanten Informationen enthalten sind.

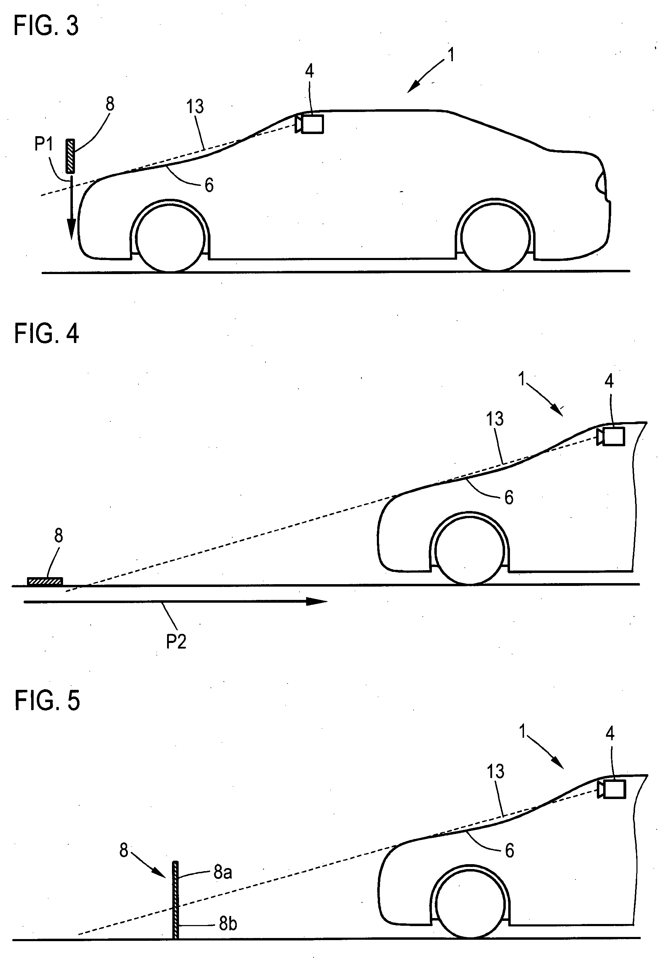

Fig. 3 zeigt in Form einer Prinzipdarstellung eine Alternative zur festen Anordnung des Referenzmusters 8 an der Fahrzeugfront, wie in Fig. 1 gezeigt. Bei dieser Ausgestaltung ist das Referenzmuster 8, wie durch den Pfeil P1 gezeigt, längs einer Führung vertikal auf- und abbewegbar. Die Kamera 4 kann das Referenzmuster so lange erfassen, bis es quasi von der Fahrzeugfront, hier wiederum der Motorhaube 6, verdeckt ist, was dann der Fall ist, wenn das Referenzmuster bis unter die Linie 13 abgesenkt ist. Die Steuerungseinrichtung 3 nimmt nun eine Vielzahl von Bildern der Kamera 4, die während der Absenkbewegung aufgenommen wurden, zur Analyse heran und ermittelt so wiederum den entsprechenden Übergangsbereich 12, um die Bildbereiche 9 und 10 exakt zu definieren.

Bei der Ausgestaltung nach Fig. 4 ist wiederum ein Referenzmuster 8 vorgesehen, das hier jedoch horizontal beweglich ist, wie durch den Pfeil P2 dargestellt. Es befindet sich vor dem Kraftfahrzeug 1. Das Referenzmuster 8 wird längs des Pfeils P2 in Richtung des Kraftfahrzeugs 1 geschoben und passiert die dargestellte Linie 13, verschwindet also mit zunehmender Annäherungsbewegung. Die Steuerungseinrichtung 3 analysiert wiederum eine Vielzahl von Kamerabildern und erfasst auf diese Weise den exakten Bewegungsweg des Referenzmusters 3 und damit auch den Übergangsbereich 12, basierend worauf sodann die Bildbereiche 9 und 10 definiert werden.

Bei der Ausführungsform gemäß Fig. 5 ist schließlich ein Referenzmuster 8 gezeigt, das statisch ist, sich also nicht relativ zum Fahrzeug bewegt, welches ebenfalls positionsfest ist. Das Referenzmuster 8 ist hier als Stange oder Stab ausgeführt. Er weist einen ersten Abschnitt 8a auf, der, da statisch, permanent im Bild der Kamera 4 sichtbar ist. Der zweite, untere Bereich 8b ist von der Motorhaube 6 abgedeckt, ist also im Bild nicht sichtbar. Die Bereiche 8a und 8b sind über die Linie 13 getrennt.

Die Steuerungseinrichtung 3 umfasst nun im Kamerabild das Referenzmuster 8 und damit den Bereich 8a und kann so exakt die Bildbereiche 9 und 10 definieren und voneinander unterscheiden.

Die Ausführungsform gemäß Fig. 5 entspricht im Wesentlichen der Ausführungsform gemäß Fig. 1, lediglich mit dem Unterschied, dass das Referenzmuster 8 nicht, wie bei Fig. 1, am Fahrzeug selbst befestigt ist, sondern positionsfest vor dem Fahrzeug angeordnet ist.

Anstelle der Bewegung des Referenzmusters 8 ist es natürlich auch möglich, dass das Kraftfahrzeug 1 relativ zum positionsfesten Referenzmuster zu bewegen.

Die vorgenommene Bestimmung der Lage der Linie 11, also die Definition des Bildbereichs 9 und 10 kann einmalig werkseitig erfolgen, wenn das System einmalig eingerichtet respektive kalibriert wird. Es ist aber auch möglich, diese Kalibrierung regelmäßig bei Werkstattbesuchen vorzunehmen.

## Patentansprüche

1. Verfahren zum Betrieb eines kamerabasierten Fahrzeugsystems, umfassend eine Kamera (4), die im oder am Fahrzeug zur Aufnahme des Fahrzeugumfelds angeordnet ist, sowie eine die Kamerabilder verarbeitende Steuerungseinrichtung (3),
**dadurch gekennzeichnet,**
**dass** zur Bestimmung eines in wenigstens einem Kamerabild (7) gegebenen informationsrelevanten Bildbereichs (9) seitens der Steuerungseinrichtung (3) ein in dem Kamerabild gezeigter, einen Teil des Fahrzeugs (1) zeigenden Bildbereich (10) im Kamerabild (7) selbst ermittelt wird, welcher Bildbereich (10) im Rahmen der Verarbeitung nachfolgend aufgenommener Kamerabilder (7) außer Betracht bleibt.

2. Verfahren nach Anspruch 1,
**dadurch gekennzeichnet,**
**dass** die Ermittlung des einen Teil des Fahrzeugs (1) zeigenden Bildbereichs (10) anhand eines in dem oder den zu verarbeitenden Kamerabildern (7) gezeigten Musters oder Objekts (8) das im informationsrelevanten Bildbereich (9) sichtbar und im des Teil des Fahrzeugs (1) zeigenden Bildbereich (10) verdeckt ist, erfolgt, welches Muster oder Objekt (8) seitens der Steuerungseinrichtung (3) ermittelt wird.

3. Verfahren nach Anspruch 2,
**dadurch gekennzeichnet,**
**dass** das Muster oder Objekt (8) am Fahrzeug (1) angeordnet ist, oder sich vor dem Fahrzeug (1) befindet.

4. Verfahren nach Anspruch 3,
**dadurch gekennzeichnet,**
**dass** während der Aufnahme der Kamerabilder (7) das Muster oder Objekt (8) und das Fahrzeug (1) positionsfest sind, oder dass sich das Muster oder Objekt (8) relativ zum Fahrzeug (1) oder das Fahrzeug (1) relativ zum Muster oder Objekt (8) bewegt.

5. Verfahren nach Anspruch 4,
**dadurch gekennzeichnet,**
**dass** bei sich relativ zum Fahrzeug (1) bewegendem Muster oder Objekt (8) das Muster oder Objekt (8) im Wesentlichen horizontal bewegt und gegebenenfalls unter das Fahrzeug (1) geführt wird, oder dass das Muster oder Objekt (8) auf- und/oder abbewegt wird.

6. Verfahren nach Anspruch 4,
**dadurch gekennzeichnet,**
**dass** bei sich relativ zum Muster oder Objekt (8) zu bewegendem Fahrzeug (1) das Fahrzeug (1) das Muster oder Objekt (8) überfährt.

7. Verfahren nach einem der vorangehenden Ansprüche,
**dadurch gekennzeichnet,**
**dass** das Muster oder Objekt ein Referenzmuster (8) ist.

8. Verfahren nach einen der Ansprüche 1 - 6,
**dadurch gekennzeichnet,**
**dass** das Muster oder Objekt ein natürliches, im Fahrzeugvorfeld oder Fahrzeugrückfeld befindliches Muster oder Objekt ist, das seitens der Steuerungseinrichtung (3) bestimmt wird.

9. Verfahren nach Anspruch 8,
**dadurch gekennzeichnet,**
**dass** als Muster oder Objekt ein solches bestimmt wird, das eine im Bild sichtbare Kantenstruktur aufweist.

10. Verfahren nach Anspruch 1,
**dadurch gekennzeichnet**,
das der im Kamerabild gezeigte Teil des Kraftfahrzeugs durch einen Vergleich zeitlich nacheinander aufgenommener Bilder ermittelt wird.

11. Kraftfahrzeug, umfassend eine Kamera (4) mit zugeordneter Steuerungseinrichtung (3), ausgebildet zur Durchführung des Verfahrens nach einen der vorangehenden Ansprüche.

## Claims

1. Method for operating a camera-based vehicle system, comprising a camera (4) arranged in or on the vehicle to capture the vehicle surroundings, and also a control device (3) to process the camera images, **characterised in that**, for the determination of an information-relevant image area (9) given in at least one camera image (7) by the control device (3), an image area (10) shown in the camera image and showing a part of the vehicle (1) is established in the camera image (7) itself, which image area (10) is left out of consideration within the framework of the processing of subsequently captured camera images (7).

2. Method according to claim 1, **characterised in that** the determination of the image area (10) showing a part of the vehicle (1) with the help of a pattern or object (8), shown, in the one or more camera images (7) to be processed, which is visible in the information-relevant image area (9) and concealed in the image area (10) showing the part of the vehicle (1), which pattern or object (8) is established by the control device (3).

3. Method according to claim 2, **characterised in that** the pattern or object (8) is arranged on the vehicle (1) or is located in front of the vehicle (1).

4. Method according to claim 3, **characterised in that** during the capture of the camera images (7) the pattern or object (8) and the vehicle (1) remain in the same position, or that the pattern or object (8) moves relative to the vehicle (1) or the vehicle (1) moves relative to the pattern or object (8).

5. Method according to claim 4, **characterised in that**, if the pattern or object (8) moves relative to the vehicle (1), the pattern or object (8) moves substantially horizontally and is optionally guided under the vehicle (1), or that the pattern or object (8) is moved up and/or down.

6. Method according to claim 4, **characterised in that**, if the vehicle (1) is to be moved relative to the pattern or object (8), the vehicle (1) runs over the pattern or object (8).

7. Method according to any one of the preceding claims, **characterised in that** the pattern or object is a reference pattern (8).

8. Method according to any one of claims 1 - 6, **characterised in that** the pattern or object is a natural pattern or object located in the area in front of the vehicle or in the area behind the vehicle, which pattern or object is determined by the control device (3).

9. Method according to claim 8, **characterised in that** the pattern or object determined is one having an edge structure that is visible in the image.

10. Method according to claim 1, **characterised in that** the part of the motor vehicle shown in the camera image is established through a comparison of images captured successively over time.

11. Motor vehicle, comprising a camera (4) with associated control device (3), configured to perform the method according to any one of the preceding claims.

## Revendications

1. Procédé servant à faire fonctionner un système de véhicule basé sur une caméra, comprenant une caméra (4), qui est disposée dans ou au niveau du véhicule afin de réaliser une prise de vue de l'environnement de véhicule, ainsi qu'un dispositif de commande (3) traitant les images de caméra,
**caractérisé en ce**
**que** pour définir une zone d'image (9) importante en termes d'information donnée dans au moins une image de caméra (7), une zone d'image (10) affichée dans l'image de caméra, affichant une partie du véhicule (1) est déterminée dans l'image de caméra (7) elle-même du côté du dispositif de commande (3), laquelle zone d'image (10) n'est pas prise en compte dans le cadre du traitement d'images de caméra (7) prises par la suite.

2. Procédé selon la revendication 1,
**caractérisé en ce**
**que** la détermination de la zone d'image (10) affichant une partie du véhicule (1) est effectuée à l'aide d'un motif ou objet (8) affiché dans l'image de caméra ou les images de caméra (7) à traiter, qui est visible dans la zone d'image (9) importante en termes d'information et est dissimulé dans la zone d'image (10) affichant une partie du véhicule (1), lequel motif ou objet (8) est déterminé du côté du dispositif de commande (3).

3. Procédé selon la revendication 2,
**caractérisé en ce**
**que** le motif ou objet (8) est disposé au niveau du véhicule (1) ou se trouve devant le véhicule (1).

4. Procédé selon la revendication 3,
**caractérisé en ce**
**que** lors de la prise des images de caméra (7), le motif ou l'objet (8) et le véhicule (1) sont fixes en position, ou le motif ou l'objet (8) se déplace par rapport au véhicule (1) ou le véhicule (1) se déplace par rapport au motif ou l'objet (8).

5. Procédé selon la revendication 4,
**caractérisé en ce**
**que** lorsque le motif ou l'objet (8) se déplace par rapport au véhicule (1), le motif ou l'objet (8) est déplacé sensiblement de manière horizontale et est guidé éventuellement sous le véhicule (1), ou que le motif ou l'objet (8) est déplacé vers le haut et/ou vers le bas.

6. Procédé selon la revendication 4,
**caractérisé en ce**
**que** lorsque le véhicule (1) se déplace par rapport au motif ou à l'objet (8), le véhicule (1) roule sur le motif ou l'objet (8).

7. Procédé selon l'une quelconque des revendications précédentes,
**caractérisé en ce**
**que** le motif ou l'objet est un motif de référence (8).

8. Procédé selon l'une quelconque des revendications 1 à 6,
**caractérisé en ce**
**que** le motif ou l'objet est un motif ou objet naturel, se trouvant dans le champ avant du véhicule ou dans le champ arrière du véhicule, qui est défini du côté du dispositif de commande (3).

9. Procédé selon la revendication 8,
**caractérisé en ce**
**qu'**est défini en tant que motif ou objet un élément du type, qui présente une structure à arêtes visible sur l'image.

10. Procédé selon la revendication 1,
**caractérisé en ce**
**que** la partie, affichée sur l'image de caméra, du véhicule automobile est déterminée par une comparaison d'images prises les unes après les autres chronologiquement.

11. Véhicule automobile comprenant une caméra (4) avec un dispositif de commande (3) associé, réalisé afin de mettre en oeuvre le procédé selon l'une quelconque des revendications précédentes.
